# EUROPEAN PATENT APPLICATION

(11) **EP 3 982 096 A1**
(43) Date of publication of application: **13.04.2022**
(21) Application number: 20201219.1
(22) Date of filing: 12.10.2020
(51) Int. Cl.: G01L 1/18, G01L 1/20, G01L 1/22, G01L 5/162, G01L 5/1627, G01L 9/00, G01L 9/06, G06F 3/045

(54) **SENSOR ELEMENT FOR DETECTING PRESSURE APPLIED TO THE SENSOR ELEMENT**

(71) Applicant: BASF SE, 67056 Ludwigshafen am Rhein (DE)
(72) Inventor: SAUVA, Sophie, 69115 Heidelberg (DE); TISSERANT, Jean-Nicolas, 69115 Heidelberg (DE); SCHINKE, Janusz, 69115 Heidelberg (DE)
(74) Representative: Hörschler, Wolfram Johannes

(57) **Abstract**

A Sensor element (10) for detecting pressure applied to the sensor element (10) is proposed, the sensor element (10) comprising a first substrate (12) having a first sensing layer (14) disposed on a first surface (121) of the first substrate (12), wherein the first sensing layer (14) has a first active area (146) defining a sensing region (20), characterized in that the sensor element (10) further comprises force concentration means (22) having at least one protrusion (24) configured to concentrate force on a plurality of contact points or at least one contact zone in the sensing region (20), wherein the thickness of the at least one protrusion (24), seen in a direction perpendicular to the plane of the first substrate (12), is in the range of from 1 µm to 1000 µm.

Further aspects of the invention relate to a sensor arrangement comprising an array of sensor elements and the use of such a sensor arrangement.

## Description

The invention relates to a sensor element for detecting pressure applied to the sensor element comprising a substrate having a sensing layer disposed on a surface of the substrate, wherein the sensing layer has an active area defining a sensing region. Further aspects of the invention relate to a sensor arrangement comprising an array of sensor elements and the use of such a sensor arrangement.

### Description

Pressure sensors are known in the art that are based on the Force Sensitive Resistor (FSR) technology. FSR resistors are resistive sensors exhibiting varying resistance in response to force applied to a sensing area of the sensor. The application of pressure lowers the electrical resistance of the sensors which can then be detected using an appropriate detection circuit. Known force sensitive resistor based sensors suffer from low reproducibility in their force-response at low force regimes (usually below 1 N/cm²) as well as limited sensitivity in this force range.

It is known in the art to improve the response of a force sensitive resistor to low forces by using an arrangement for applying a preload to the sensor.

US 9,664,577 B1 discloses a force-sensitive resistor assembly having a first substrate, a second substrate and a thermoset ink disposed between the two substrates on the surfaces of the substrates. A spacer may be arranged between the two substrates such that a gap is formed between thermoset ink disposed on the first substrate and thermoset ink disposed on the second substrate. The assembly further comprises a preload layer which compresses a force concentration layer against a top surface of the first substrate.

Further, it is known in the art to use actuators having a tip which is brought in contact with the force sensitive resistor.

US 9,524,020 B2 and US 10,310,695 B2 each describe sensors for detecting force imparted onto the sensor. The comprises a grid of wires, wherein parallel lines of conductive traces are disposed on two sensor sheets facing each other with one rotated 90° with respect to the other. Force sensitive resistors are located at the intersections of the grid of the conductive traces. The sensor further comprises an array of protrusions which are in contact with the plurality of intersections in order to transmit force onto the force sensitive resistors. The sensor may further comprise rigid plates wherein the corners of the rigid plates are aligned to the protrusions. The protrusions are shaped such that force is transmitted evenly to the entire sensing area of the force sensitive resistors.

The known sensor arrangements include additional elements for providing a preload or include rigid plates with large protrusions that do not allow for thin, flexible sensor elements. It is thus an object of the invention to provide a thin sensor element having improved sensitivity.

A sensor element for detecting pressure applied to the sensor element is proposed. The sensor element comprises a first substrate having a first sensing layer disposed on a first surface of the first substrate, and optionally a second substrate, wherein the first sensing layer has a first active area defining a sensing region. Further, the sensor element comprises force concentration means having at least one protrusion configured to concentrate force on a plurality of contact points or at least one contact zone in the sensing region, wherein the thickness of the at least one protrusion, seen in a direction perpendicular to the plane of the first substrate, is in the range of from 1 µm to 1000 µm.

As pressure is defined as force per area, the proposed sensor element may of course also be used to detect and measure force which is applied to a defined area of the sensor element. For application of pressure/force, the sensor element may be placed between two rigid substrates in a sandwich configuration.

When pressure/force is applied to the sensor element, the force concentration means focus the force onto a small area of the sensing region resulting in an increased response of the sensor element that may be detected, for example, by measuring an electrical resistance of the first active layer. In particular, an increase in pressure/force may be detected as a reduction of an electrical resistance of the sensor element. The thin force concentration means unexpectedly lead to a similar behaviour as macroscopic protrusions known in the prior art having typical thicknesses in the order of at least 1 mm and more.

Preferably, the thickness of the at least one protrusion is from 2 µm to 200 µm, more preferably from 5 to 500 µm and most preferably from 10 µm to 100 µm.

The at least one contact zone does not cover the entire surface of the sensing region, Also, all contact zones together do not fully cover the sensing region as it is intended to concentrate the force onto a smaller region.

Preferably, a single contact zone covers not more than 50% of the area of the sensing region. Also, a contact zone has preferably a complex, non-compact shape.

Preferably, the sensor element comprises a second substrate having a second sensing layer disposed on a second surface of the second substrate, and the second sensing layer has a second active area, wherein the first and second sensing areas overlap in the sensing region. The two substrates are arranged such that the first and second sensing layers face each other.

Preferably, the material of the first substrate is chosen from a plastic material. In particular, suitable materials for the first substrate include polyethylene terephthalate, polyethylene naphtalate, polyimide and polyurethane.

Suitable materials for the second substrate include wood, glass, metals, plastics, in particular polycarbonates, polyvinyl chloride, polymethyl methacrylate, polyurethane, polyethylene terephthalate, polyethylene naphtalate and polyimide. While not preferred, the materials described for the second substrate may also be used for the first substate.

The materials of the first and second substrates may be chosen independently. However, it is also possible to choose the same material for both substrate.

Preferably, the thickness of the first substrate and/or the second substrate is from 5 µm to 1000 µm, more preferably from 5 µm to 200 µm and most preferably from 10 µm to 100 µm.

Preferably, the thickness of the first sensing layer and/or the second sensing layer is from 0.1 µm to 500 µm, more preferably from 1 µm to 100 µm and most preferably from 2 µm to 50 µm.

Preferably, the thicknesses for the individual layers of the core structure and the force concentration means are chosen such that the total thickness of the sensor element comprising the core structure and the force concentration means is less than 1000 µm, more preferably less than 500 µm and most preferred less than 200 µm. In particular, the thickness of the force concentration means is preferably chosen as low as possible to allow for a thin and preferably flexible sensor element.

The sensor element may further include a distance piece to provide a gap between the two sensing layers. The gap between the two sensing layers is preferably chosen to be in the range of from 1 µm to 500 µm, more preferably from 5 µm to 200 µm and most preferably from 10 µm to 100 µm.

The distance piece may, for example, be shaped to surround the sensing region of the sensor element. Suitable materials for the distance piece include, for example, the materials defined for the first and/or second substrate.

In case the sensor element comprises only a single substrate and thus only a single sensing layer, the respective sensing layer comprises two electrical contacts which allow measurement of a resistance of the sensing layer. The sensing layer is configured such that the electrical resistance of the sensing layer changes depending on the pressure applied to the sensor element and thus depending on the pressure applied to the sensing layer by means of the force concentration means.

In case the sensor element comprises two substrates and accordingly two sensing layers, the sensor element may be configured such that one of the two sensing layers has both electrical contacts for measurement of an electrical resistance or, alternatively, each of the sensing layers may comprise one of the two electrical contacts for measuring electrical resistance. The two sensing layers are configured such that the measured electrical resistance across the two electrical contacts depends on the pressure applied to the sensor element and thus depends on the pressure applied to the sensing layer by means of the force concentration means

Configurations of the sensor element having both electrical contacts assigned to a single sensing layer are called shunt mode configurations and configurations of the sensor element having a first electrical contact assigned to the first sensing layer and a second electrical contact assigned to the second sensing layer are called through mode configurations.

Preferably, the force concentration means comprise at least one protrusion which is arranged on a second surface of the first substrate and/or on a first surface of the second substrate.

Preferably, the force concentration means comprise at least one carrier substrate and the at least one protrusion is arranged on a surface of the at least one carrier substrate. The at least one carrier substrate is preferably arranged adjacent to the second surface of the first substrate or is arranged adjacent to the first surface of the second substrate. In case two carrier substrates are used, it is preferred to arrange the carrier substrates such that the first and second substrates are located between the two carrier substrates.

By arranging the force concentration means on the second surface of the first substrate and/or on the first surface of the second substrate, and or on the one or two carrier substrates, the at least one protrusion is arranged outside of a core structure of the sensor element. The core structure comprises the one or two substrates, the first sensing layer and, if present, the second sensing layer. The second surface of the first substrate as well as the first surface of the second substrate each face towards the outside of said core structure.

Preferably, the force concentration means comprise a first set having at least one protrusion arranged on the second surface of the first substrate or on a carrier substrate arranged adjacent to the second surface of the first substrate as well as a second set having at least one protrusion arranged on the first surface of the second substrate or a carrier substrate arranged adjacent to the first surface of the second substrate. In a first variant i), the protrusions are configured and arranged such that the first set does not overlap with the second set. In a second variant ii), the protrusions are configured and arranged such that the first set and the second set are arranged in a crossed pattern. For example, the first set and the second set are essentially of the same configuration but arranged at an angle of, for example 90° with respect to each other. In a third variant iii), the protrusions are configured and arranged such that the first set overlaps with the second set. In this case, the first set and the second set are preferably of the same shape and overlap fully.

Especially variant i) allows to further increase the sensitivity of the sensor element by causing a 3-point bending in the first and/or second sensing layer when force/pressure is applied to the sensor element.

Preferably, the at least one protrusion is configured as at least one protrusion of a solid material layer, is configured as one or more spacers deposited onto a solid material layer, is configured as one or more wires, especially cylindrical wires, or is configured as fabrics of woven or non-woven material. The solid material layer may be the first and/or second substrate and/or one or two carrier layers.

Preferably, the spacers are made from a metal, a plastic material, a ceramic or made from an amorphous material such as glass. Suitable plastic materials include thermoplastic polyurethanes (TPU), polylactic acid (PLA), acrylonitrile butadiene styrene (ABS) and varnishes and acrylate based polymers such as isobornylacrylate and hydroxypropylmethacrylate.

Preferably, the one or more spacers are formed by means of additive manufacturing. Suitable processes include printing and in particular printing or 3D printing.

For example, a printing process used to form the spacers may comprise application of a resin comprising monomers and curing of the resin after application. Suitable printing processes include, for example, screen-printing and ink jet printing. Curing of the resin may, for example be performed by irradiating of the resin with UV light or by application of heat.

Suitable 3D printing processes include, for example, stereolithography and fused deposition modelling.

Preferably, the one or more spacers have the shape of cylinders, pyramids, cones, spheres or half spheres or are shaped in the form of grid pattern. In case of a grid pattern, the at least one protrusion may be configured as a single spacer. Suitable examples of grid patterns include hexagon/honeycomb patterns, square patterns and fractal patterns.

If multiple spacers are used, they are preferably arranged in a regular pattern. For example, in case of cylindrical spacers, it is preferred to arrange the cylinders in the form of parallel lines on a substrate or carrier layer.

In case line-shaped spacers are used as protrusions, it is preferred to choose the width of the line in the range of from 100 µm to 5 mm. In case cylinder shaped spacers are used as protrusions, it is preferred to choose the diameter of the cylinders in the range of from 100 µm to 1000 µm.

Preferably, multiple spacers are used, wherein a density of the spacers per cm² is preferably from 1 to 100 and more preferably from 2 to 10.

Preferably, the first substrate and/or the second substrate and/or, if present, the carrier layer(s) is/are a flexible substrate(s)/layer(s).

Flexible substrates or layers may be bent and wound onto a roll without breaking. In particular, a flexible substrate/layer in the context of the present invention is a substrate/layer having a minimum bending radius of preferably 100 mm or less, more preferably 20 mm or less and most preferred 2 mm or less. The minimum bending radius in this context is the radius below which the substrate/layer should not be bent in order to avoid damage.

If at least one of the substrates is flexible, for example the first substrate, it is preferred to configure and arrange the force concentration means comprising the at least one protrusion such that the substrate is caused to bend if force is applied to the respective flexible substrate by means of the at least one protrusion.

Preferably, the first sensing layer and/or the second sensing layer is a layer structure comprising an electrode layer and an active layer.

Preferably, the active layer comprises or consists of a semiconducting material, a piezoelectric material, a piezoresistive material or a composite material based on metallic nanoparticles in a polymer. Suitable materials for the active layer include in particular materials based on carbon black/polymer composite or carbon nanotube/polymer composites. Examples for suitable nanoparticles for embedding in a polymer material matrix include silver, gold and copper nanoparticles.

The electrode layer is preferable structured to define one or more conductive traces. If a single conductive trace is used, it is preferred to use a meandering structure. In case two conductive traces are used, it is preferred to use a shape of interdigitating fingers.

Suitable materials for the electrode layers and/or the conductive traces formed in the electrode layers include metals such as silver, copper, gold, aluminum as well as carbon based materials, in particular materials based on carbon black, carbon nanotubes, graphene.

In one embodiment of the sensor element in a shunt mode configuration, the sensor element comprises a single substrate having a single sensing layer. The sensing layer is configured as a layer structure having an electrode layer having two sets of conductive traces, preferably in the form of interdigitating fingers, and an active layer comprising a piezoresistive material.

In a further embodiment of the sensor element in a shunt mode configuration, the sensor element comprises a first substrate having a first sensing layer and a second substrate having a second sensing layer. Further one of the first sensing layer and the second sensing layer is configured as two sets of conductive traces, preferably arranged in the form of interdigitating fingers, and the other one of the first sensing layer and the second sensing layer is configured as an active layer comprising or consisting of a semiconducting material.

In another embodiment of the sensor element in through mode configuration, the sensor element comprises a first substrate having a first sensing layer and a second substrate having a second sensing layer. Further both first sensing layer and the second sensing layer is configured as a layer structure having an electrode layer and an active layer. The electrode layers are configured, for example as a single conductive line, preferably in a meandering configuration. The active layer preferably comprises a semiconductor material.

In such a through mode configuration, it is preferred to arrange the at least one protrusion on the outside facing first surface of the second substrate or on a carrier substrate arranged adjacent to the first surface of the second substrate.

The proposed sensor element has an excellent sensitivity and measurement repeatability, especially in the pressure range between 0 and 10 N/cm².

It is another object of the invention to provide a sensor arrangement comprising an array of the sensor elements described herein.

Preferably, the sensor elements in the sensor arrangement are individually contacted or are contacted by means of a matrix array. In case of a matrix array, it is preferred to provide two sets of crossed lines, wherein the sensor elements are arranged at the crossing points of two of the lines and are electrically connected to these crossed lines.

By measuring the electrical resistance of the sensor elements of the sensor arrangement, the force/pressure present at the position of the respective sensor elements may be determined. When, for example, the sensor arrangement is used as weight distribution sensor, this in turn allows derivation of the weight distribution of goods placed onto the weight distribution sensor. If this weight distribution changes over time, the changing weight distribution may indicate movement of the goods.

The sensor arrangement may, for example, be connected to a measuring device that determines the electrical resistances of each of the sensor elements of the arrangement. The measuring device may be configured for detecting the position of objects placed on the sensor arrangement as well as their movement, their presence and/or their tilt.

The use of such a sensor arrangement is a further object of the invention.

In particular, the use of one of the described sensor arrangements as a weight distribution sensor configured to detect the position of objects, their movement, their presence and/or their tilt on the weight distribution sensor is proposed.

Further, flexible embodiments of the proposed sensor element may be used to sense force exerted onto the sensor by bending and sheering.

The invention is described in more detail below on the basis of the drawings, in which:
Figure 1 shows a first embodiment of a sensor element for detecting pressure in a schematic side view,
Figure 2 shows the first embodiment of the sensor element in a schematic top view,
Figure 3 shows a side view of a second embodiment of the sensor element,
Figure 4 shows a side view of a third embodiment of the sensor element,
Figure 5 shows a side view of a fourth embodiment of the sensor element,
Figure 6 shows a top view of the fourth embodiment of the sensor element,
Figure 7 shows a side view of a fifth embodiment of the sensor element,
Figure 8 shows resistance vs. pressure measurements for a sensor element according to the prior art,
Figure 9 shows resistance vs. pressure measurements for an inventive sensor element,
Figure 10a shows resistance/time measurements for the inventive sensor element and a sensor element according to the prior art and
Figure 10b shows an enlarged view of the measurement of figure 10a.

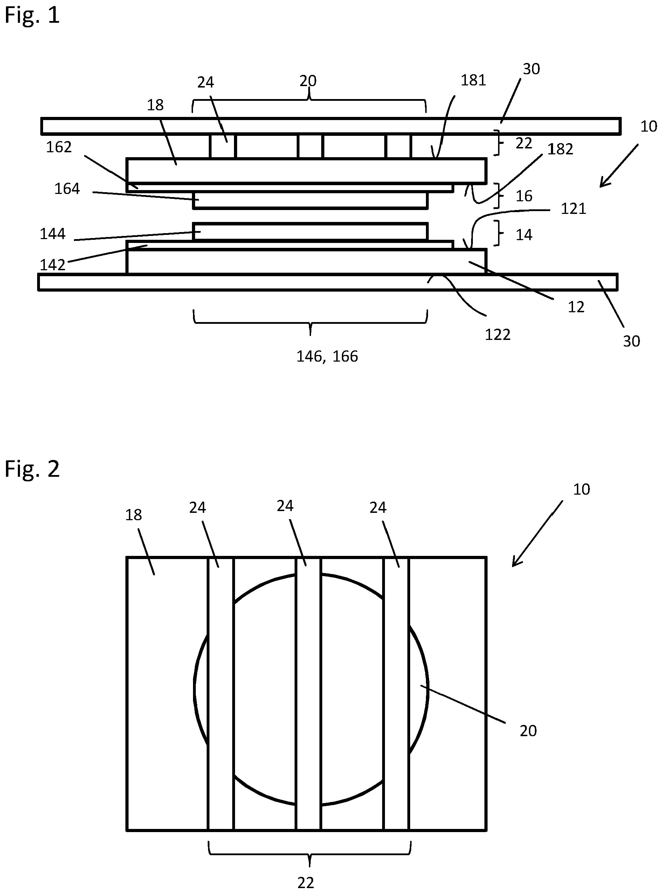

Figure 1 shows a schematic side view of a first embodiment of a sensor element 10 for detecting pressure. The sensor element 10 comprises in this order a first substrate 12, a first sensing layer 14, a second sensing layer 16, a second substrate 18 and force concentration means 22.

The first sensing layer 14 is arranged on a first surface 121 of the first substrate 12 and the second sensing layer 16 is arranged on a second surface 182 of the second substrate 18. The force concentration means 22 of the embodiment shown in figure 1 are arranged on a first surface 181 of the second substrate 18.

In the schematic view of figure 1, there is a gap shown between the first sensing layer 14 and the second sensing layer 16. A distance piece of defined thickness (not shown) may be used to control the thickness of the gap. However, the two sensing layers 14 and 16 may be arranged adjacent to each other without any gap.

In figure 1, the sensor element 10 comprising the force concentration means 22 as well as a core structure comprising the two substrates 12, 18 and the sensing layers 14, 16 is embedded between two rigid substrates 30 in a sandwich configuration. Force and/or pressure may be applied to the sensor element 10 by applying force/pressure to the rigid substrates 30.

In the example embodiment shown if figure 1, the force concentration means 22 are configured as multiple protrusions 24 shaped as rectangular strips, see also figure 2. The multiple protrusions 24 concentrate force exerted onto the sensor element 10 so that a local pressure applied to the sensor element 10 is increased compared to a full area application of the same force.

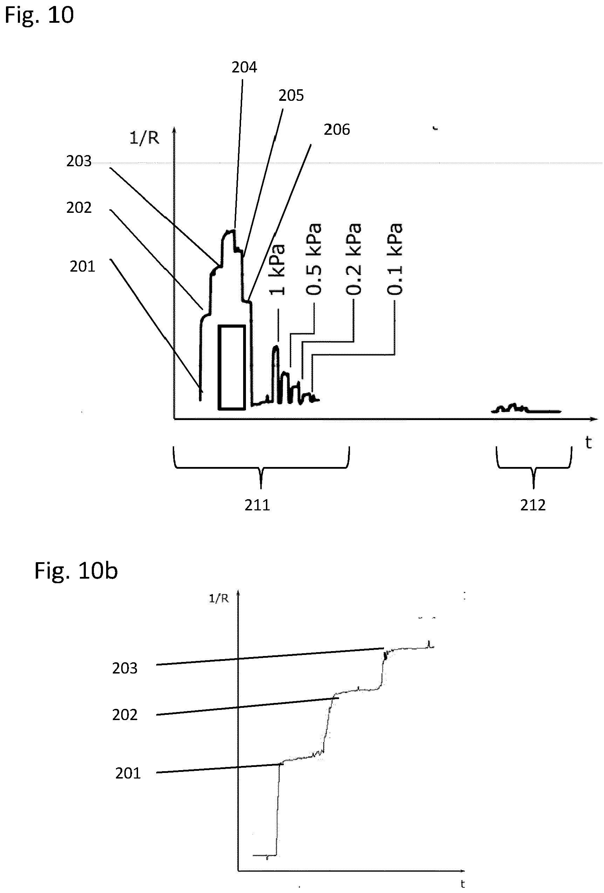

The sensor element 10 shown in figure 10 is a sensor element 10 in through mode configuration wherein both the first sensing layer 14 as well as the second sensing layer 16 comprise electrode layers 142, 162 and active layers 144, 164. The first sensing layer 14 has a first active area 146 which overlaps with a second active area 166 of the second sensing layer 16. The overlapping active areas 146, 166 define a sensing region 20 in which the sensor element 10 is capable of detecting applied force/pressure.

For measuring of force and/or pressure applied to the sensor element 10, an electrical resistance of the sensor element 10 is measured by causing an electrical current to flow from the first electrode layer 142 of the first sensing layer through the first active layer 144, the second active layer 164 to the second electrode layer 166 of the second sensing layer 16. The measured electrical resistant changes in dependence on the applied force/pressure.

Figure 2 shows the first embodiment of the sensor element 10 of figure 1 in a schematic top view. In the top view of figure 2, the upper rigid substrate 30 has been removed so that the force concentration means 22 comprising the multiple protrusions 24 are visible.

As can be seen in figure 2, the multiple protrusions 24 are shaped as rectangular strips arranged in parallel and covering at least the sensing region 20 of the sensor element 10. In the example of figure 2, the sensing region 20 is of circular shape. However, different shapes such as, for example, a rectangular, square or hexagonal shape are also possible.

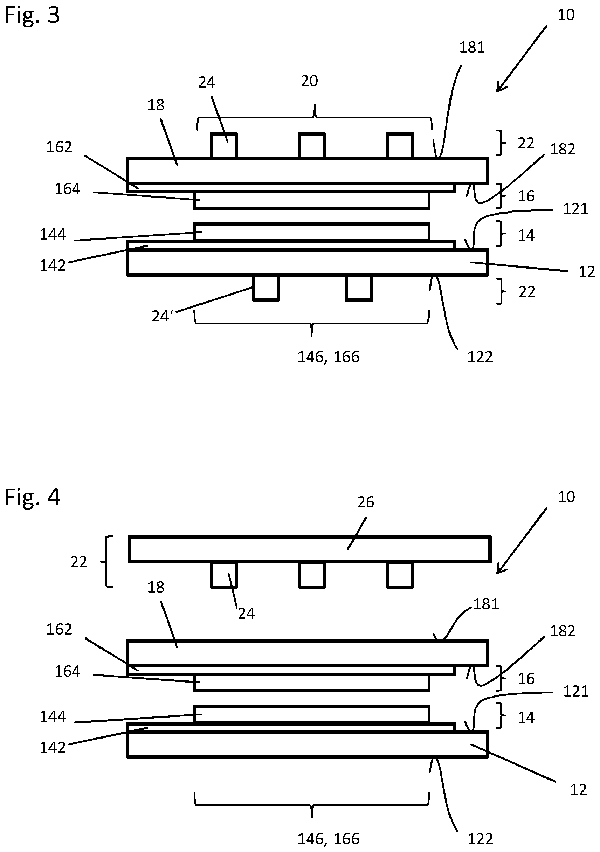

Figure 3 shows a side view of a second embodiment of the sensor element 10.

The sensor element 10 of the second embodiment comprises a core structure which is identical to the core structure of the first embodiment of figure 1. In particular, the core structure of the sensor element 10 of figure 3 comprises in this order the first substrate 12, the first sensing layer 14, the second sensing layer 16 and the second substrate 18.

In contrast to the first embodiment of figure 1, the sensor element 10 of the second embodiment has force concentration means 20 comprising a first set of protrusions 24 arranged on the first surface 181 of the second substrate 18 as well as a second set of protrusions 24' arranged on a second surface 122 of the first substrate 12. Both the first set of protrusions 24 as well as the second set of protrusions 24' comprise multiple square shaped lines arranged in parallel to each other. However, the second set of protrusions 24' is shifted with respect to the first set of protrusions 24 such that the protrusions 24, 24' do not overlap.

If force/pressure is applied to the sensor element 10 of the second embodiment, for example by means of rigid substrate (not shown), a three-point bending of the first and second sensing layers 14, 16 occurs which causes an increased change of electrical resistance measurable by causing an electrical current to flow from the first electrode layer 142 through the first active layer 144 and the second active layer 164 to the second electrode layer 166.

Figure 4 shows a side view of a third embodiment of the sensor element 10.

The sensor element 10 of the third embodiment comprises a core structure which is identical to the core structure of the first embodiment of figure 1. In particular, the core structure of the sensor element 10 of figure 4 comprises in this order the first substrate 12, the first sensing layer 14, the second sensing layer 16 and the second substrate 18.

In contrast to the first embodiment of figure 1, the sensor element 10 of the third embodiment has force concentration means 20 comprising protrusions 24 arranged on a carrier substrate 26. The carrier substrate 26 is, in the example shown in figure 4, arranged adjacent to the second substrate 18 such that the protrusions 24 face towards the first surface 181 of the second substrate 18. However, in alternative embodiments different arrangements are conceivable. For example, the carrier substrate 26 could be arranged adjacent to the first substrate 12 or two carrier substrates 26 having protrusions could be provided such that the core structure of the sensor element 10 is sandwiched between the two carrier substrates 26. Further, it is conceivable to arrange the carrier substrate 26 and the protrusions 24 such that the protrusions 24 face away from the core structure of the sensor element 10.

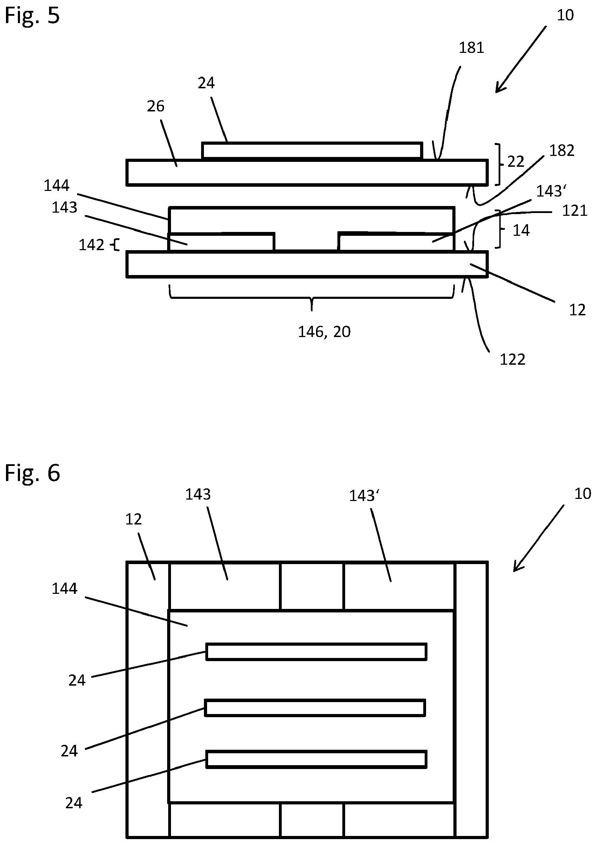

Figure 5 shows a side view of a fourth embodiment of the sensor element 10 that is configured in shunt mode.

The sensor element 10 of the fourth embodiment comprises as core structure in this order a first substrate 12 and a first sensing layer 14 as only sensing layer. The first sensing layer 14 comprises an electrode layer 142 and an active layer 144. The first electrode layer 142 is structured to define two conductive traces 143, 143' that are separated from each other. The material of the active layer 144 covers the two conductive traces 143, 143' and also fills the space between the two. The material of the active layer 144 is chosen such that it changes its electrical resistance in response to applied pressure. The conductive traces 143, 143' as well as the active layer 144 define an active layer 144 and thus the sensing region 20 of the sensor element 10.

The sensor element 10 of figure 5 further comprises force concentration means 22 including a carrier substrate 26 and a plurality of protrusions 24 arranged on the carrier substrate. In the example configuration depicted in figure 5, the protrusions 24 are arranged on the side of the carrier substrate 26 facing away from the core structure, the carrier substrate 26 being arranged adjacent to the active layer 14.

If force/pressure is applied to the sensor element 10 of the fourth embodiment, for example by means of rigid substrate (not shown), the protrusions 24 concentrate the force onto the active layer 144 causing a change of electrical resistance measurable by causing an electrical current to flow from a first conductive trace 143 through the active layer 144 to a second conductive trace 143'.

Figure 6 shows a top view of the fourth embodiment of the sensor element 10 of figure 5 in which the carrier substrate 26 has been omitted to better show the active layer 144 as well as the conductive traces 143, 143'.

As can be seen in figure 6, the active material of the active layer 144 bridges the two conductive traces 143, 143' of the electrode layer 142. Also, it can be seen that the multiple protrusions 24 are configured as square lines arranged in parallel to each other.

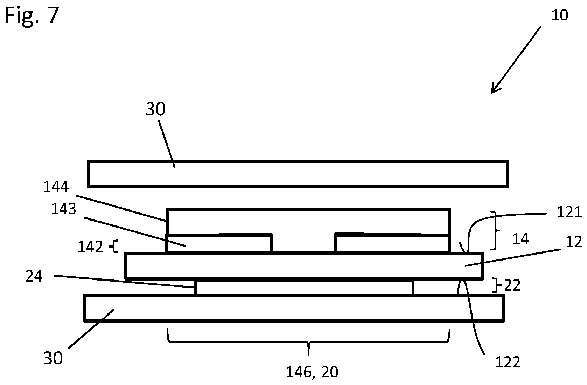

Figure 7 shows a side view of a fifth embodiment of the sensor element 10 comprising the same core structure as the sensor element 10 of the fourth embodiment. In contrast to the sensor element 10 of the fourth embodiment, the force concentration means 22 are configured as multiple protrusions 24 arranged on the outward facing second surface 122 of the first substrate 12.

Further, in the example shown in figure 7, the sensor element 10 is sandwiched between two rigid substrates 30 which allow application of force onto the sensor element 10.

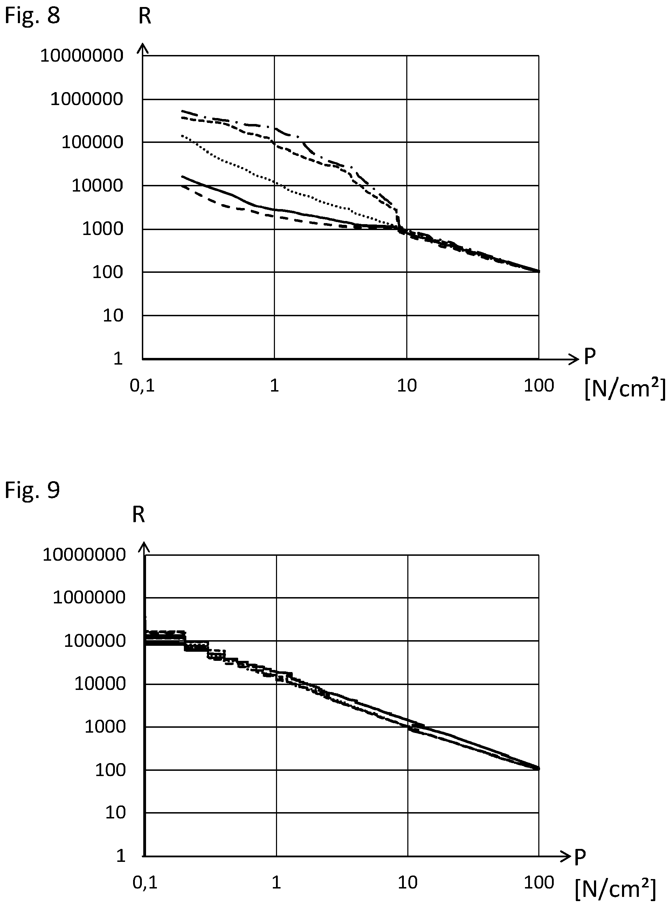

Figure 8 depicts a diagram showing resistance vs pressure measurements for a comparative example sensor element according to the prior art and Figure 9 depicts resistance vs pressure measurements for an inventive sensor element. The X-axis in figures 8 and 9 denotes the applied pressure in N/cm² and the Y-axis denotes the resistance R in Ohm.

The inventive sensor element is identical to the tested comparative example sensor element according to the prior art except for the addition of force concentration means.

Both sensor elements are configured for operation in through mode and comprise two substrates, each having an electrode layer and an active layer. The active layers each include a fore sensing material based on a mixture of ethyleneglycol monobutyl ether acetate, carbon black, cellulose nitrate, propan-2-ol, ethyl 2-cyanoacrylate and hydroquinone.

The inventive sensor includes additional force concentration means. The force concentration means are in the tested example configured as a line having a width of 1000 µm and a thickness of 20 µm printed on a substrate of the sensor element using screen printing. The material used for printing the spacer is a mixture of isobornylacrylate, hydroxypropylmethacrylate + 2-(2-ethoxyethoxy)ethyl acrylate and diphenyl(2,4,6-trimethylbenzoyl)phosphine oxide

Both the inventive sensor as well as the comparative sample were cycled for five times by continuously increasing the applied pressure from about 0.1 N/cm² to about 100 N/cm² with a speed of 1 N/cm² per second. For measurement of the resistance, the respective sensor element was connected to a Keithley multimeter device.

Figure 8 depicts five traces measured with the sensor element of the state of the art. Each of the traces shows the measured resistance vs the applied pressure. As can be seen from the diagram of figure 8, the traces show a large divergence in a low pressure regime below about 10 N/cm².

Figure 9 depicts five traces measured with the inventive sensor element. Each of the traces shows the measured resistance vs the applied pressure. As can be seen from the diagram of figure 9, the traces are nearly identical even in the low pressure regime below about 10 N/cm².

The inventive sensor element has increased repeatability of the measurements making the inventive sensor element particularly useful for measurements in the low pressure regime while at the same time showing good performance for higher pressures.

Figure 10a shows resistance vs time measurements for the inventive sensor element and the sensor element according to the prior art, wherein a first curve 211 depicts the measurement of the inventive sensor element and a second curve 212, which is shifted from the first curve 211, depicts the measurement of the state of the art sensor element as comparative example.

Six points 201 - 206 have been marked on the first curve 201 indicating points wherein weights were applied to the sensor element (first three points 201, 202, 203) or removed from the sensor element (second three points 204, 205, 206). Weights of about 150 g were used, wherein up to three of the weights have been stacked in order to increase the applied pressure in defined steps.

After removal of the last of the stacked weights, four different weights were applied one after each other to subsequently apply defined forces of 1 kPa, 0.5 kPa, 0.2 kPa and 0.1 kPa.

For the first curve 211, all six steps are clearly identifiable, wherein nearly no change in measured resistance is visible for the second curve 212. Also, the subsequent application of the four defined pressures are also clearly identifiable, even for pressures as low as 0.1 kPa.

In the comparative example of the second curve, none of the applied weight steps or defined pressures is clearly identifiable as the sensitivity for such comparatively low forces of the state of the art sensor element is too low.

Figure 10b an enlarged view of the first three applied stacked weights of the first curve of figure 10a.

### List of reference numerals

- 10: sensor element
- 12: first substrate
- 121: first surface
- 122: second surface
- 14: first sensing layer
- 142: electrode layer
- 143: conductive trace
- 144: active layer
- 146: first active area
- 16: second sensing layer
- 162: electrode layer
- 164: active layer
- 166: second active area
- 18: second substrate
- 181: first surface
- 182: second surface

- 20: sensing region

- 22: force concentration means
- 24: protrusion
- 26: carrier substrate

- 201-206: first... sixth point

- 211: first curve
- 212: second curve

## Claims

1. Sensor element (10) for detecting pressure applied to the sensor element (10) comprising a first substrate (12) having a first sensing layer (14) disposed on a first surface (121) of the first substrate (12), wherein the first sensing layer (14) has a first active area (146) defining a sensing region (20), **characterized in that** the sensor element (10) further comprises force concentration means (22) having at least one protrusion (24) configured to concentrate force on a plurality of contact points or at least one contact zone in the sensing region (20), wherein the thickness of the at least one protrusion (24), seen in a direction perpendicular to the plane of the first substrate (12), is in the range of from 1 µm to 1000 µm.

2. Sensor element (10) according to claim 1, wherein the sensor element (10) further comprises a second substrate (18) having a second sensing layer (16) disposed on a second surface (182) of the second substrate (18), the two substrates (12, 18) being arranged such that the first and second sensing layers (14, 16) face each other, wherein the second sensing layer (16) has a second active area (166) and wherein the first and second sensing areas (146, 166) overlap in the sensing region (20).

3. Sensor element (10) according to claim 1 or 2, wherein the force concentration means (22) comprising at least one protrusion (24) are arranged on a second surface (122) of the first substrate (12) and/or on a first surface (181) of the second substrate (18).

4. Sensor element (10) according to any one of claims 1 to 3, wherein the force concentration means (22) comprise at least one carrier substrate (26) and the at least one protrusion (24) is arranged on a surface of the at least one carrier substrate (26), the at least one carrier substrate (26) being arranged adjacent to a second surface of the first substrate (12), being arranged adjacent to a first surface of the second substrate (18) or two carrier substrates (26) being arranged such that the first and second substrates (12, 18) are located between the two carrier substrates (26).

5. Sensor element (10) according to claim 3 or 4, **characterized in that** the force concentration means (22) comprises a first set having at least one protrusion (24) arranged on the first substrate (12) or a carrier substrate (26) arranged adjacent to the first substrate (12) as well as a second set having at least one protrusion (24') arranged on the second substrate (18) or a carrier substrate (26) arranged adjacent to the second substrate (18), wherein
i) the protrusions (24, 24') are configured and arranged such that the first set does not overlap with the second set, or
ii) the protrusions (24, 24') are configured and arranged such that the first set and the second set are arranged in a crossed pattern, or
iii) the protrusions (24, 24') are configured and arranged such that the first set overlaps with the second set.

6. Sensor element (10) according to any one of claims 1 to 5, **characterized in that** the at least one protrusion (24) is configured as at least one protrusion (24) of a solid material layer, is configured as one or more spacers deposited onto a solid material layer, is configured as one or more cylindrical wires or is configured as fabrics of woven or non-woven material.

7. Sensor element (10) according to claim 6, **characterized in that** the one or more spacers are formed by means of additive manufacturing.

8. Sensor element (10) according to claim 6 or 7, **characterized in that** the one or more spacers have the shape of cylinders, pyramids, cones, spheres or half spheres or are shaped in the form of grid pattern.

9. Sensor element (10) according to any one of claims 1 to 8, **characterized in that** the first substrate (12) and/or the second substrate (18) and/or, if present, the carrier substrate (26) is a flexible substrate.

10. Sensor element (10) according to any one of claims 1 to 9, **characterized in that** the first sensing layer (14) and/or the second sensing layer (16) is a layer structure comprising an electrode layer (142, 162) and an active layer (144, 164).

11. Sensor element (10) according to any one of claims 1 to 10, **characterized in that** the active layer (144, 164) comprises or consists of a semiconducting material, piezoelectric materials, a piezoresistive material or a composite material based on metallic nanoparticles in a polymer.

12. Sensor element (10) according to any one of claims 1 to 11, **characterized in that** one of the first sensing layer (14) and the second sensing layer (16) is a configured as two sets of conductive traces, preferably arranged in the form of interdigitating fingers, and the other one of the first sensing layer (14) and the second sensing layer (16) is configured as an active layer (144, 164) comprising or consisting of a semiconducting material.

13. Sensor arrangement comprising an array of sensor elements (10) according to any one of claims 1 to 12.

14. Sensor arrangement according to claim 13, **characterized in that** the sensor elements (10) are individually contacted or are contacted by means of a matrix array.

15. Use of a sensor arrangement according to claim 13 or 14 as a weight distribution sensor configured to detect the position of objects, their movement, their presence and/or their tilt on the weight distribution sensor.
